# EUROPÄISCHE PATENTSCHRIFT

(11) **EP 3 625 065 B1**
(45) Veröffentlichungstag und Bekanntmachung des Hinweises auf die Patenterteilung: **23.06.2021**
(21) Anmeldenummer: 18718755.4
(22) Anmeldetag: 10.04.2018
(51) Int. Cl.: B60G 7/00, B62D 7/20, B62D 7/16, F16C 11/06

(54) **VERFAHREN ZUR HERSTELLUNG EINES VERBINDUNGSELEMENTES SOWIE VERBINDUNGSELEMENT**
METHOD FOR PRODUCING A CONNECTION ELEMENT, AND CONNECTION ELEMENT
PROCÉDÉ DE FABRICATION D'UN ÉLÉMENT DE LIAISON ET ÉLÉMENT DE LIAISON

(30) Priorität: 15.05.2017 DE 102017208096
(43) Veröffentlichungstag der Anmeldung: 25.03.2020
(73) Patentinhaber: ZF Friedrichshafen AG, 88046 Friedrichshafen (DE)
(72) Erfinder: NACHBAR, Frank, 49088 Osnabr ck (DE); BONKOWSKI, Oliver, 49152 Bad Essen (DE); DOBBELHOFF, Frank, 49593 Bersenbrück (DE)
(74) Vertreter: ZF Friedrichshafen AG
(86) Internationale Anmeldenummer: PCT/EP2018/059095
(87) Internationale Veröffentlichungsnummer: WO 2018/210489

(56) Entgegenhaltungen:
- EP-A2- 1 329 343
- EP-A2- 1 953 012
- WO-A1-2013/050219
- DE-C- 575 296
- US-A- 1 829 305
- US-A- 2 511 788
- US-B1- 6 698 963

## Beschreibung

Die Erfindung betrifft ein Verfahren zur Herstellung eines Verbindungselementes, insbesondere zum gelenkigen Verbinden von in einem Fahrwerk angeordneten Bauteilen, wobei das Verbindungselement von einem Profilelement gebildet wird, der einen Gelenkabschnitt zur Aufnahme eines Gelenkbauteils, einen Mittenabschnitt und einen Verbindungsabschnitt aufweist, wobei das Profilelement durch eine Anordnung zumindest eines ersten Profilabschnitts und zumindest eines zweiten Profilabschnitts gebildet wird, welche mittels zumindest eines Fixierelements durch Formschluss in ihrer Position gehalten werden, und in den sich ausbildenden Gelenkabschnitt ein Gelenkbauteil eingesetzt wird.

Des Weiteren betrifft die Erfindung ein Verbindungselement, insbesondere zum gelenkigen Verbinden von in einem Fahrwerk angeordneten Bauteilen, wobei das Verbindungselement ein abschnittsweise zylindrisches Profilelement umfasst, der einen Gelenkabschnitt zur Aufnahme eines Gelenkbauteils, einen Mittenabschnitt und einen Verbindungsabschnitt aufweist, wobei das Profilelement durch eine Anordnung zumindest eines ersten Profilabschnitts und zumindest eines zweiten Profilabschnitts gebildet ist, wobei zumindest ein Fixierelement durch Formschluss den zumindest einen ersten Profilabschnitt und den zumindest einen zweiten Profilabschnitt in ihrer Position hält, wobei von dem Gelenkabschnitt des Profilelements ein Gelenkbauteil aufgenommen ist.

Ein derartiges Verfahren und ein derartiges Verbindungselement sind aus der US 2 511 788 A bekannt. Hierbei wird das Profilelement aus zwei einzelnen metallenen Stanzteilen gebildet, die mittels einer Niete miteinander verbunden sind.

Aus der EP 1 329 343 A2 ist ebenfalls die Ausbildung eines Verbindungselementes bekannt, bei dem das Profilelement aus zwei einzelnen Profilabschnitten in Gestalt von eigenständigen Halbschalen gebildet wird.

Der US 1 829 305 A ist die Ausbildung eines Verbindungselementes zu entnehmen, wobei das Profilelement hier ebenfalls aus zwei einzelnen Profilabschnitten zusammengesetzt ist.

Spurstangen verbinden die Zahnstange einer Lenkung mit Radträgern eines Kraftfahrzeuges, um auf ein Lenkrad ausgeübte Lenkbewegungen zu den Rädern weiterzuleiten. An den Spurstangen sind endseitig Verbindungselemente angeordnet, welche dem Ausgleich räumlicher Bewegungen der Räder dienen, die durch eine federnde Bewegung der Räder parallel zur Lenkachse hervorgerufen werden. Die Verbindungselemente weisen an ihrem einen Ende einen Gelenkabschnitt auf, von dem ein Gelenkbauteil aufgenommen wird. Ein Verbindungsabschnitt am anderen Ende dient der längenverstellbaren Anordnung an der Spurstange mittels eines im Verbindungsabschnitt vorgesehenen Innengewindes.

Die Verbindungselemente sind im Allgemeinen als einteilige Metallbauteile ausgeführt. Ein wesentlicher Nachteil von Verbindungselementen aus Metall ist, dass diese ein hohes Gewicht aufweisen, zumeist eine zusätzliche Nachbearbeitung im Rahmen der Herstellung notwendig ist und zudem Maßnahmen gegen Korrosion zu treffen sind. Das höhere Gewicht steigert dabei den Anteil der ungefederten Massen, was sich negativ hinsichtlich der Fahreigenschaften und auch dem Verbrauch des jeweiligen Kraftfahrzeuges niederschlägt. Aus diesem Grund werden Verbindungselemente vermehrt in Hybridbauweise, also einer Kombination eines metallischen Werkstoffes mit einem Kunststoff hergestellt.

Aus der DE 10 2008 049 946 A1 ist ein als Gelenkgehäuse ausgeführtes Verbindungselement für eine Spurstangenanordnung eines Kraftfahrzeugs bekannt. Das Gelenkgehäuse weist einen aus einem Kunststoff hergestellten abschnittsweise zylindrischen Körper auf, der einen Gelenkabschnitt zur Aufnahme eines Gelenkbauteils, einen Mittenabschnitt und einen Verbindungsabschnitt aufweist. In den aus Kunststoff bestehenden Körper sind beabstandet zueinander einzelne Einlegeteile aus Stahl eingebettet. Diese Einlegeteile müssen zur Herstellung des Körpers im Spritzgussverfahren vorher in einem entsprechenden Spritzgusswerkzeug einzeln positioniert werden, damit sie von dem Kunststoff eingeschlossen werden. Der Gelenkabschnitt, der Mittenabschnitt und der Verbindungsabschnitt bilden sich erst im Zuge des Umspritzens der Einlegeteile aus.

Ausgehend vom vorstehend beschriebenen Stand der Technik ist es nun die Aufgabe der vorliegenden Erfindung, den Herstellprozess eines in Hybridbauweise hergestellten Verbindungselementes zu vereinfachen.

Diese Aufgabe wird aus verfahrenstechnischer Sicht ausgehend vom Oberbegriff des Anspruchs 1 in Verbindung mit dessen kennzeichnenden Merkmalen gelöst. Aus vorrichtungstechnischer Sicht erfolgt eine Lösung der Aufgabe ausgehend vom Oberbegriff des nebengeordneten Anspruchs 8 in Verbindung mit dessen kennzeichnenden Merkmalen. Die hierauf jeweils folgenden, abhängigen Ansprüche geben jeweils vorteilhafte Weiterbildungen der Erfindung wieder.

Gemäß der Erfindung wird bei einem Verfahren ein Verbindungselement hergestellt, wobei das Verbindungselement von einem Profilelement gebildet wird. Das Profilelement des Verbindungselementes weist einen Gelenkabschnitt zur Aufnahme eines Gelenkbauteils, einen Mittenabschnitt und einen Verbindungsabschnitt auf.

Die Erfindung umfasst nun die technische Lehre, dass das Profilelement durch eine Anordnung zumindest eines ersten Profilabschnitts und zumindest eines zweiten Profilabschnitts gebildet wird, welche mittels zumindest eines Fixierelements durch Formschluss in ihrer Position gehalten werden, dass in den sich ausbildenden Gelenkabschnitt ein Gelenkbauteil eingesetzt wird, und dass das Profilelement und das Gelenkbauteil abschnittsweise mit einem Kunststoff umspritzt werden. Das erfindungsgemäße Verfahren stellt eine Weiterbildung der Hybridbauweise von Fahrwerkskomponenten dar. Hierbei werden in einem ersten Herstellschritt mehrere Metallbauteile durch Formschluss miteinander verbunden, so dass diese eine Einheit bilden. Diese in sich stabilisierte Einheit lässt sich in einfacherer Weise händeln. Im Anschluss daran wird die aus den Metallbauteilen gebildete Einheit in ein Werkzeug eingelegt und abschnittsweise mit einem Kunststoff umspritzt. Insbesondere das Transportieren und Einlegen der als Einheit zusammengefügten Metallbauteile vereinfacht den Fertigungsschritt des Umspritzens, da dieser stärker automatisiert werden kann.

Eine weitere Vereinfachung des erfindungsgemäßen Verfahrens lässt sich dadurch erzielen, dass der zumindest eine erste Profilabschnitt und der zumindest eine zweite Profilabschnitt als Gleichteile ausgeführt sind. Hierdurch lassen sich die Fertigungskosten zu deren Herstellung reduzieren. Zudem vereinfacht die Ausführung des zumindest einen ersten Profilabschnitts und des zumindest einen zweiten Profilabschnitts als Gleichteile deren Anordnung zur Ausbildung des Profilelementes, da diese spiegelbildlich zueinander positioniert werden können.

Dagegen werden bei dem aus der DE 10 2008 049 946 A1 bekannten Gelenkgehäuse die Einzelteile, aus denen sich Gelenkgehäuse zusammensetzt, erst durch das Umspritzen im Werkzeug miteinander verbunden, was eine präzise Anordnung der Einzelteile im Werkzeug erforderlich macht, die zeitaufwändig ist und eine Automatisierung zumindest erschwert.

So wird durch das erfindungsgemäß Verfahren die Genauigkeit der Positionierung von Funktionsbauteilen wie des Gelenkbauteils in dem Gelenkabschnitt erhöht. Obwohl das Profilelement aus zumindest zwei Profilabschnitten gebildet wird, durch deren zusammenfügen, im Unterschied zu dem aus der DE 10 2008 049 946 A1 bekannten Gelenkgehäuse, bereits der Gelenkabschnitt, der Mittenabschnitt und der Verbindungsabschnitt ausgebildet werden, bleiben die Vorteile der Hybridbauweise, ein geringes Gewicht sowie eine kostengünstige Herstellung erhalten.

So können vor dem Umspritzen im Bereich des zumindest einen ersten und zweiten Profilabschnittes, der den Mittenabschnitt und den Verbindungsabschnitt des Profilelements definiert, ein Kern zwischen den ersten Profilabschnitt und den zweiten Profilabschnitt eingelegt werden. Dies ist vorteilhaft, um den Verbindungsabschnitt des Verbindungselementes, der ein Innengewinde zur axialen Verstellung der Spurstange aufweisen kann, nach dem Umspritzen nutzen zu können.

Gemäß einer Ausführungsform der Erfindung können der zumindest eine erste Profilabschnitt und der zumindest eine zweite Profilabschnitt aus einem Metall oder einem von dem für das Umspritzen verwendeten Kunststoffmaterial abweichenden Kunststoffmaterial hergestellt werden. Bei einer Herstellung des ersten Profilabschnitts und der zweiten Profilabschnitts aus einem Metall kommen bevorzugt Stahl oder Aluminium zur Anwendung. Bei einer Herstellung des ersten Profilabschnitts und des zweiten Profilabschnitts aus einem Kunststoffmaterial wird vorzugsweise hochfester Kunststoff verwendet. Der erste Profilabschnitt und der zweite Profilabschnitt weisen einen halbschalenförmigen Abschnitt auf, an den sich ein gekröpfter Abschnitt anschließt, der den halbschalenförmigen Abschnitt mit einem ringförmigen Abschnitt verbindet. Die spiegelsymmetrische Ausgestaltung der beiden Profilabschnitte vereinfacht deren Fertigung, da deren Form identisch ist. Dabei können die beiden Profilabschnitte aus zwei Teilen bestehen oder einteilig ausgebildet sein. Im Fall der erfindungsgemäßen einteiligen Ausführung sind die beiden Profilabschnitte nach ihrer Herstellung an ihren einander gegenüberliegenden ringförmigen Abschnitten durch einen Steg miteinander verbunden.

Im Falle einer zweiteiligen Ausführung können die beiden Profilabschnitte nach ihrer Herstellung an ihren einander gegenüberliegenden ringförmigen Abschnitten, insbesondere im Bereich einer Frontseite der beiden Profilabschnitte und/oder Halbzeugs, mittels einer formschlüssigen Verbindung miteinander verbunden sein. Hierbei kann aufgrund der formschlüssigen Verbindung eine stegartige Verbindungsstruktur realisiert sein. Dabei ist von Vorteil, dass im Vergleich zur einteiligen Ausführung kleinere und/oder einfachere Werkzeuge für die Herstellung der Profilabschnitte eingesetzt werden können. Zugleich ermöglicht die stegartige Verbindungsstruktur im Zusammenbau der beiden Profilabschnitte miteinander vergleichbar mit der einteiligen Ausführung die Übertragung oder Weiterleitung von Kräften. Vorzugsweise weist der erste Profilabschnitt ein erstes Formschlusselement und der zweite Profilabschnitt ein zweites Formschlusselement auf. Die beiden Formschlusselemente sind korrespondierend zueinander ausgebildet, um die Herstellung eines Formschlusses der beiden Formschlusselemente miteinander zu ermöglichen. Insbesondere sind die beiden Formschlusselemente jeweils als stegartige Vorsprünge an dem jeweiligen ringförmigen Abschnitt ausgebildet. Vorzugsweise sind die Formschlusselemente quer oder rechtwinklig zu dem jeweiligen ringförmigen Abschnitt oder einer Ebene, in der der ringförmige Abschnitt liegt, ausgerichtet. Insbesondere sind die Formschlusselemente einander zugewandt. Beispielsweise könne die beiden Formschlusselemente eine puzzleartige Verbindung realisieren, bei der eine Nase des einen Formschlusselementes in eine korrespondierend hierzu ausgebildete Nasenaufnahme eingreift.

Um eine hohe Festigkeit des Verbindungselementes zu erreichen, kann das Profilelement mit einem faserverstärkten Kunststoff umspritzt werden. Als Fasern können dabei unterschiedliche Fasertypen zur Anwendung kommen, wie Carbon, Glas, Aramid, Basalt, etc.

Entsprechend einer weiteren Ausgestaltungsmöglichkeit der Erfindung werden der zumindest eine erste Profilabschnitt und der zumindest eine zweite Profilabschnitt durch ein zerteilendes Fertigungsverfahren hergestellt. Dabei können das Stanzen oder das Laserstrahlschneiden bevorzugte Fertigungsverfahren sein. Diese Fertigungsverfahren ermöglichen eine kostengünstige Herstellung des ersten Profilabschnitts und des zweiten Profilabschnitts in großer Stückzahl. Insbesondere bei einer Ausführung als Gleichteile.

Alternativ zu dem zerteilenden Fertigungsverfahren können der zumindest eine erste Profilabschnitt und der zumindest eine zweite Profilabschnitt durch Spritzpressen hergestellt werden.

Es ist eine weitere Ausführungsform der Erfindung, dass das zumindest eine Fixierelement auf den zumindest einen ersten Profilabschnitt und den zumindest einen zweiten Profilabschnitt aufgepresst wird. Aufgrund der abschnittsweise rotationssymmetrischen Form des Profilelementes lässt sich das zumindest eine Fixierelement vom Verbindungsabschnitt her aufschieben und im an den Gelenkabschnitt angrenzenden Bereich auf dem Mittenabschnitt aufpressen. Denkbar ist auch, ein weiteres Fixierelement aufzupressen, welches endseitig auf dem Verbindungsabschnitt angeordnet wird. Das zweite Fixierelement kann verhindern, dass die beiden Profilabschnitte beim Einführen des Kerns auseinander gedrückt oder die Profilabschnitte gegeneinander verschoben werden. Zudem kann die äußere Mantelfläche des endseitig auf dem Verbindungsabschnitt angeordneten Fixierelementes eine Angriffsfläche für ein Werkzeug aufweisen.

Weiterhin wird zur Lösung der Aufgabe ein Verbindungselement, insbesondere zum gelenkigen Verbinden von im Fahrwerk angeordneten Bauteilen, beansprucht, wobei das Verbindungselement ein Profilelement umfasst, das einen Gelenkabschnitt zur Aufnahme eines Gelenkbauteils, einen Mittenabschnitt und einen Verbindungsabschnitt aufweist. Dabei ist das Profilelement durch eine Anordnung zumindest eines ersten Profilabschnitts und zumindest eines zweiten Profilabschnitts gebildet, wobei zumindest ein Fixierelement durch Formschluss den zumindest einen ersten Profilabschnitt und den zumindest einen zweiten Profilabschnitt in ihrer Position hält. Des Weiteren ist von dem Gelenkabschnitt des Profilelements das Gelenkbauteil aufgenommen, wobei das Profilelement und das in dem Gelenkabschnitt aufgenommene Gelenkbauteil abschnittsweise von einer im Spritzgussverfahren aufgebrachten Kunststoffschicht abschnittsweise umgeben sind.

Ein erfindungsgemäß gestaltetes Verbindungselement ist insbesondere Teil einer Radaufhängung eines Kraftfahrzeuges und ist als ein Spurstangenaußengelenk oder als ein Querlenker ausgeführt.

Vorteilhafte Ausführungsformen der Erfindung, die nachfolgend erläutert werden, sind in den Zeichnungen dargestellt. Es zeigt:
- Fig. 1: eine schematische Ansicht eines nicht erfindungsgemäßen Verbindungselements;
- Fig. 2a: eine schematische Darstellung eines nicht erfindungsgemäßen ersten Profilabschnitt in perspektivischer Ansicht;
- Fig. 2b: eine schematische Darstellung des ersten Profilabschnitts und eines nicht erfindungsgemäßen zweiten Profilabschnitts;
- Fig. 2c: eine schematische Darstellung des ersten Profilabschnitts und des zweiten Profilabschnitts mit einem ersten Fixierelement;
- Fig. 2d: eine schematische Darstellung des ersten Profilabschnitts und des zweiten Profilabschnitts mit einem zweiten Fixierelement;
- Fig. 2e: eine schematische Darstellung eines aus dem ersten Profilabschnitt und dem zweiten Profilabschnitt gebildeten Profilelements mit einem Gelenkbauteil;
- Fig. 2f: eine schematische Darstellung des Profilelementes gemäß Fig. 2e mit Kunststoffummantelung;
- Fig. 3: eine schematische Ansicht eines erfindungsgemäßen Verbindungselements gemäß einer zweiten Ausführungsform;
- Fig. 4a: eine schematische Darstellung eines Halbzeugs in perspektivischer Ansicht;
- Fig. 4b: eine schematische Darstellung eines erfindungsgemäßen ersten Profilabschnitts und eines erfindungsgemäßen zweiten Profilabschnitts;
- Fig. 4c: eine schematische Darstellung des ersten Profilabschnitts und des zweiten Profilabschnitts mit einem ersten Fixierelement;
- Fig. 4d: eine schematische Darstellung des ersten Profilabschnitts und des zweiten Profilabschnitts mit einem zweiten Fixierelement;
- Fig. 4e: eine schematische Darstellung eines aus dem ersten Profilabschnitt und dem zweiten Profilabschnitt gebildeten Profilelements mit einem Gelenkbauteil; und
- Fig. 4f: eine schematische Darstellung des Profilelementes gemäß Fig. 4e mit Kunststoffummantelung.

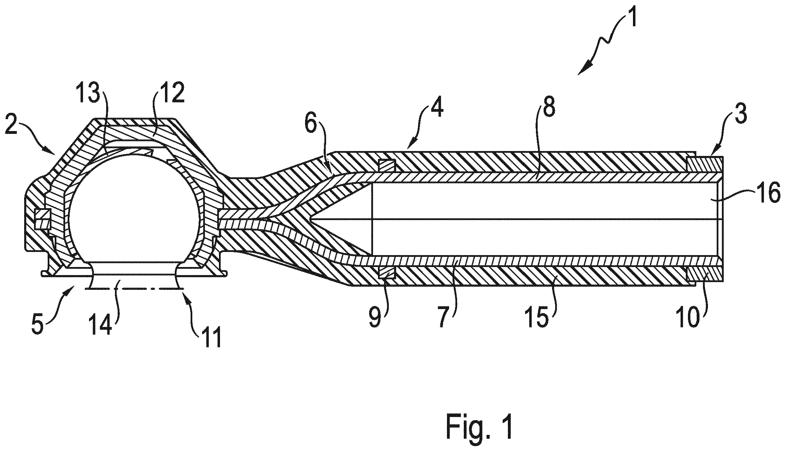

In Fig. 1 ist in schematischer Darstellung ein als Spurstangenaußengelenk ausgeführtes Verbindungselement 1 dargestellt. Das Verbindungselement 1 gliedert sich in mehrere Abschnitte, einen Gelenkabschnitt 2, einen Verbindungsabschnitt 3 sowie einen Mittenabschnitt 4, der den Gelenkabschnitt 2 und den Verbindungsabschnitt 3 miteinander verbindet. Der Gelenkabschnitt 2 dient der Aufnahme eines Gelenkbauteils 5 während der Verbindungsabschnitt 3 der längenverstellbaren Anordnung an einer - nicht dargestellten - Spurstange dient.

Das Verbindungselement 1 wird von einem abschnittsweise zylindrischen Profilelement 6 gebildet. Das Profilelement 6 umfasst zumindest einen ersten Profilabschnitt 7 und zumindest einen zweiten Profilabschnitt 8. Der erste Profilabschnitt 7 und der zweite Profilabschnitt 8 sind jeweils abschnittsweise halbschalenförmig ausgeführt und spiegelbildlich zueinander angeordnet. Die beiden Profilabschnitte 7 und 8, die das Profilelement 6 bilden, sind im dargestellten Ausführungsbeispiel als zwei separate Halbzeuge ausgeführt. Auf dem Mittenabschnitt 4 ist ein erstes Fixierelement 9 angeordnet. Das erste Fixierelement 9 ist im Wesentlichen ringförmig ausgebildet. Auf dem Verbindungsabschnitt 3 ist ein zweites Fixierelement 10 angeordnet. Das zweite Fixierelement 10 ist ebenfalls im Wesentlichen ringförmig ausgebildet. Die Innenkontur des ersten und des zweiten Fixierelements 9 und 10 ist an die Außenkontur des Profilelementes 6 angepasst, so dass der erste Profilabschnitt 7 und der zweite Profilabschnitt 8 durch Formschluss in ihrer Position gehalten werden.

Der Gelenkabschnitt 2 nimmt das Gelenkbauteil 5 auf, welches als Kugelgelenk 11 ausgeführt ist. Das Kugelgelenk 11 umfasst ein Gehäuse 12, eine darin angeordnete Kugelschale 13 sowie einen in der Kugelschale 13 gelagert Kugelzapfen 14.

Das Profilelement 6 sowie das Gehäuse 12 des Kugelgelenks 11 sind abschnittsweise von einer Kunststoffummantelung 15 umgeben. Wie aus der Darstellung ersichtlich ist, ist die Öffnung des Gehäuses 12 aus der der Kugelzapfen 14 herausragt, nicht ummantelt. Das auf dem Verbindungsabschnitt 3 angeordnete zweite Fixierelement 10 ist ebenfalls nur abschnittsweise ummantelt, da die äußere Mantelfläche des zweiten Fixierelements 10 als eine Angriffsfläche für ein Werkzeug ausgebildet ist. In dem durch die abschnittsweise halbschalenförmigen Profilabschnitte 7 und 8 gebildeten Hohlraum des Profilelements 6 ist ein herausnehmbarer Kern 16 positioniert.

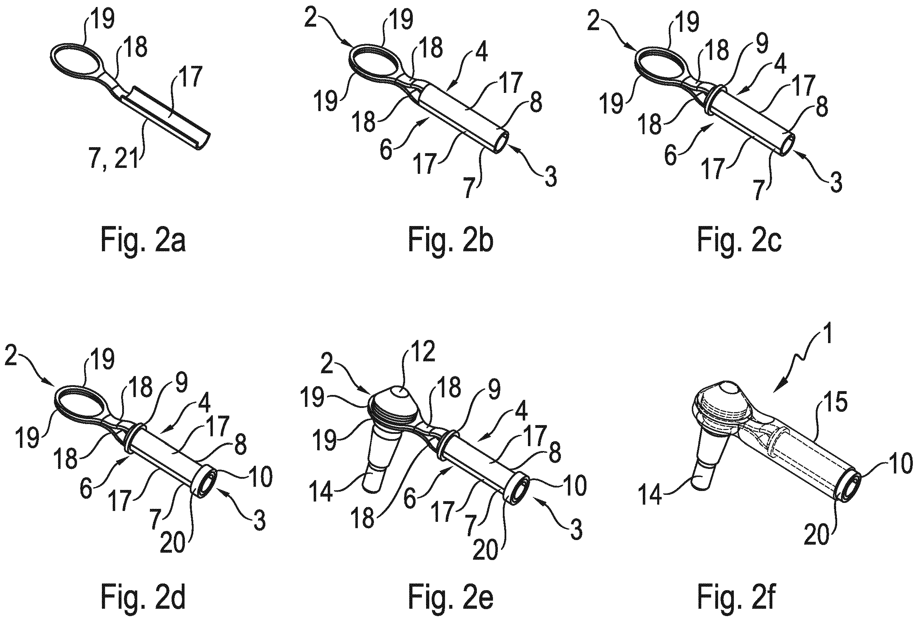

In den Fig. 2a bis 2f wird der Ablauf des Herstellverfahrens des Verbindungselementes 1 näher erläutert.

In Fig. 2a ist der erste, als Halbzeug 21 ausgebildete, Profilabschnitt 7 schematisch in perspektivischer Ansicht dargestellt. Der erste Profilabschnitt 7 weist einen halbschalenförmigen Abschnitt 17 auf, welcher durch einen gekröpften Abschnitt 18 mit einem ringförmigen, flächigen Segment 19 verbunden ist. Der erste Profilabschnitt 7 wird durch ein zerteilendes Fertigungsverfahren hergestellt, beispielsweise durch Stanzen oder Laserstrahlschneiden. Der zweite Profilabschnitt 8 ist identisch ausgestaltet und wird in identischer Weise hergestellt.

In Fig. 2b ist eine schematische Darstellung des ersten Profilabschnitts 7 und des zweiten Profilabschnitts 8 dargestellt. Die beiden Profilabschnitt 7 und 8 werden in einem ersten Verfahrensschritt spiegelbildlich zueinander angeordnet. Die beiden jeweils halbschalenförmigen Abschnitte 20 bilden den Verbindungsabschnitt 3 sowie den Mittenabschnitt 4 aus, der in die gekröpften Abschnitte 18 mündet. Die fluchtend übereinander liegenden ringförmigen flächigen Segmente 19 der beiden Profilabschnitt 7 und 8 bilden den Gelenkabschnitt 2 aus, der der späteren Aufnahme des Gelenkbauteils 5 dient.

In Fig. 2c ist eine schematische Darstellung des ersten Profilabschnitts7 und des zweiten Profilabschnitts 8 mit einem ersten darauf angeordneten Fixierelement 9 gezeigt. Das ringförmig ausgebildete erste Fixierelement 9 wird vom Verbindungsabschnitt 3 her auf den Mittenabschnitt 4 des Profilelementes 6 geschoben. Die Innenkontur des ersten Fixierelementes 9 ist an die Außenkontur des Mittenabschnitts 4 angepasst, so dass sich ein Formschluss einstellt. Im Bereich der einander gegenüberliegenden gekröpften Abschnitte 18 des ersten Profilabschnitts 7 und des zweiten Profilabschnitts 8 wird das erste Fixierelement 9 aufgepresst und dadurch örtlich auf dem Mittenabschnitt 4 fixiert.

Fig. 2d zeigt eine schematische Darstellung des ersten Profilabschnitts 7 und des zweiten Profilabschnitts 8 mit einem zweiten Fixierelement 10. Das zweite Fixierelement 10 ist ebenfalls ringförmig ausgebildet und wird endseitig auf den Verbindungsabschnitt 3 aufgepresst. Das zweite Fixierelement 10 weist auf seinem Umfang zumindest zwei Werkzeugangriffsflächen 20 auf

Fig. 2e zeigt eine schematische Darstellung des aus dem ersten Profilabschnitt 7 und dem zweiten Profilabschnitt 8 gebildeten Profilelements 6 mit dem Gelenkbauteil 5, welches in dem Gelenkabschnitt 2 angeordnet ist. Nach diesem Herstellschritt sind alle Einzelkomponenten des Verbindungselementes 1 in der Weise miteinander verbunden, dass die Einzelkomponenten als eine einzige, in sich stabile Einheit 22 gehandhabt werden können. In den Hohlraum, der sich zwischen dem ersten Profilabschnitt 7 und dem zweiten Profilabschnitt 8 ausgebildet hat, wird ein Kern 16 eingelegt. Hierdurch wird Raum freigehalten, der bei der späteren Verwendung des Verbindungselementes 1 zur Verfügung stehen muss. Die Einheit 22 wird in eine Spritzgussform eingelegt und abschnittsweise mit einem Kunststoff umspritzt, so dass sich eine die Einheit 22 abschnittsweise umhüllende Kunststoffummantelung 15 ausbildet, wie in Fig. 2f dargestellt ist. Das fertige Verbindungselement 1 ist kostengünstiger und weist ein geringeres Gewicht auf als ein vergleichbares Verbindungselement, welches einstückig aus Metall hergestellt wird. Gegenüber dem aus dem Stand der Technik bekannten Verfahren gemäß der DE 10 2008 049 946 A1, wonach in einen aus Kunststoff bestehenden Körper einzelne Einlegeteile aus Stahl eingebettet werden, die hierfür jedes für sich in die Spritzgussform eingelegt werden müssen, ist die Handhabbarkeit der als stabiler Verbund ausgeführten Einheit 22 einfacher. Die einzelnen Komponenten der Einheit wurden bereits vor ihrer Einbringung in die Spritzgussform zueinander positioniert.

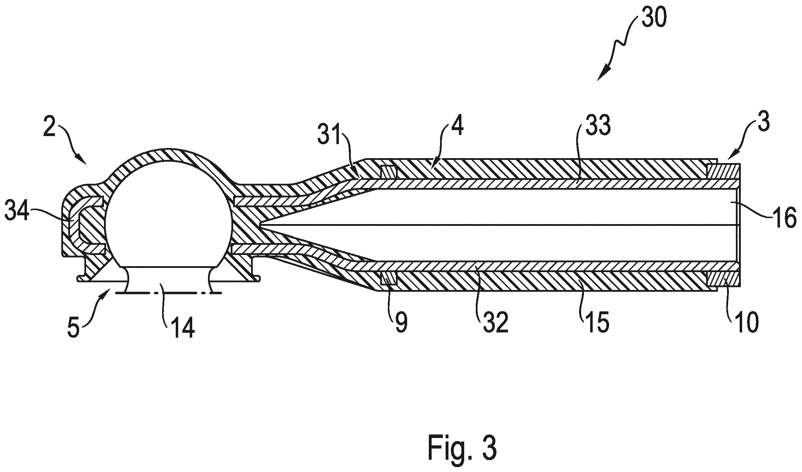

Die Darstellung in Fig. 3 zeigt eine schematische Ansicht eines Verbindungselements 30 gemäß einer zweiten Ausführungsform. Für mit dem Verbindungselement 1 gemäß der ersten Ausführungsform identische Bauteile wurden die entsprechenden Bezugszeichen beibehalten.

Das Verbindungselement 30 wird von einem abschnittsweise zylindrischen Profilelement 31 gebildet. Das Profilelement 31 umfasst einen ersten Profilabschnitt 32 und einen zweiten Profilabschnitt 33. Der erste Profilabschnitt 32 und der zweite Profilabschnitt 32 sind jeweils abschnittsweise halbschalenförmig ausgeführt und spiegelbildlich zueinander angeordnet. Im vorderen Bereich des Gelenkabschnitts 2 sind die beiden Profilabschnitte 32 und 33 durch einen Steg 34 miteinander verbunden. Der erste Profilabschnitt 32 und der zweite Profilabschnitt 33, die das Profilelement 31 bilden, sind im dargestellten Ausführungsbeispiel als ein einzelnes Halbzeug 35 ausgeführt.

Alternativ kann der Steg 34 zweiteilig ausgebildet sein, so dass der erste Profilabschnitt 32 und der zweite Profilabschnitt 33 jeweils ein stegartiges Formschlusselement aufweist, die zum Ausbilden eines Formschlusses miteinander korrespondierend zueinander ausgebildet sind.

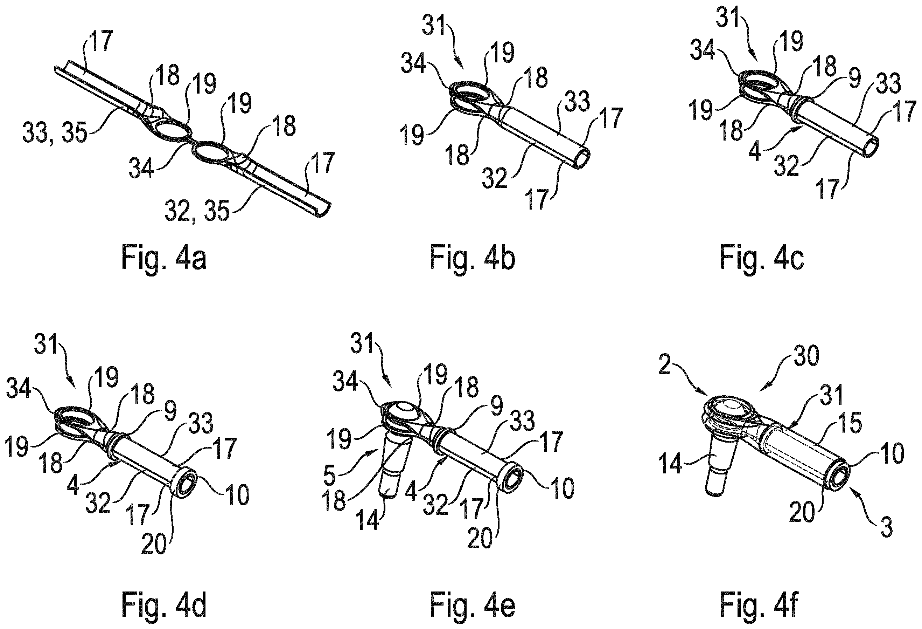

Fig. 4a zeigt eine schematische Darstellung eines Halbzeugs 35 in perspektivischer Ansicht. Das Halbzeug 35 umfasst den ersten Profilabschnitt 32 und den durch den Steg 34 mit diesem verbundenen zweiten Profilabschnitt 33. In einem ersten Schritt wird das Halbzeug 35 durch Biegen umgeformt. Dabei werden der erste Profilabschnitt 32 und der zweite Profilabschnitt 33 spiegelbildlich zueinander angeordnet, wie in Fig. 4b dargestellt. Der Steg 34 erstreckt sich nach dem Umformen der beiden Profilabschnitte 32 und 33 im Wesentlichen senkrecht zwischen diesen.

In Fig. 4c ist eine schematische Darstellung des ersten Profilabschnitts 32 und des zweiten Profilabschnitts 33 mit dem auf den Mittenabschnitt 4 des Profilelementes 31 aufgeschobenen ersten Fixierelement 9 dargestellt. Wie weiter oben bereits ausgeführt, stellt sich wegen der an die Außenkontur der beiden Profilabschnitte 32 und 33 angepassten Form der inneren Mantelfläche des ersten Fixierelementes 9 eine formschlüssige Verbindung ein. Das Fixierelement 10 wird auf das Profilelement 31 aufgepresst.

In Fig. 4d ist eine schematische Darstellung des ersten Profilabschnitts 31 und des zweiten Profilabschnitts 33 mit dem zweiten Fixierelement 10 dargestellt, welches auf den Verbindungsabschnitt 3 des Profilelementes 31 aufgeschoben ist. Das auf seinem Umfang mit zumindest zwei Werkzeugangriffsflächen 20 versehene Fixierelement 10 wird auf das Profilelement 31 aufgepresst.

Fig. 4e zeigt eine schematische Darstellung des aus dem ersten Profilabschnitt 32 und dem zweiten Profilabschnitt 33 gebildeten Profilelements 31 mit einem Gelenkbauteil 5, welches als Kugelzapfen 14 ausgeführt ist. Die Kugel des Kugelzapfens 14 wird von den beiden ringförmigen, flächigen Segment 19 gehalten. In den hohlzylindrischen Mittenabschnitt 4 wird der Kern 16 eingelegt. Die aus einem stabilen Verbund bestehende Einheit 22 wird in das Spritzgusswerkzeug eingelegt und mit abschnittsweise mit Kunststoff umspritzt, so dass sich die Kunststoffummantelung 15 ausbildet.

Fig. 4f zeigt eine schematische Darstellung des Profilelementes 31 gemäß Fig. 4e mit der Kunststoffummantelung 15. Die Kunststoffummantelung 15 bildet im Bereich des Gelenkabschnitts 2 ein Gehäuse für die Kugel des Kugelzapfens 14 aus. Zum Umspritzen des Profilelementes 6 bzw. 31 wird ein Kunststoff oder ein faserverstärkter Kunststoff verwendet. Entsprechend können sich die Spritzgussverfahren zur Herstellung des Verbindungselementes 1 bzw. 30 voneinander unterscheiden.

Eine Weiterbildung sieht vor, dass das Profilelement 6 bzw. 31 statt aus einem Metall, wie zum Beispiel Stahl oder Aluminium, ebenfalls aus einem Kunststoff hergestellt wird. Dabei ist zumindest der für das Profilelement 6 bzw. 31 verwendete Kunststoff ein anderer ist als der, welcher für das Umspritzen des Profilelementes 6 bzw. 31 verwendet wird. Insbesondere kommt für das Profilelement 6 bzw. 31 ein hochfester Kunststoff zu Anwendung.

### Bezugszeichen

- 1: Verbindungselement
- 2: Gelenkabschnitt
- 3: Verbindungsabschnitt
- 4: Mittenabschnitt
- 5: Gelenkbauteil
- 6: Profilelement
- 7: Erster Profilabschnitt
- 8: Zweiter Profilabschnitt
- 9: Erstes Fixierelement
- 10: Zweites Fixierelement
- 11: Kugelgelenk
- 12: Gehäuse
- 13: Kugelschale
- 14: Kugelzapfen
- 15: Kunststoffummantelung
- 16: Kern
- 17: Halbschalenförmiger Abschnitt
- 18: Gekröpfter Abschnitt
- 19: Ringförmiges Segment
- 20: Werkzeugangriffsfläche
- 21: Halbzeug
- 22: Einheit
- 30: Verbindungselement
- 31: Profilelement
- 32: Erster Profilabschnitt
- 33: Zweiter Profilabschnitt
- 34: Steg
- 35: Halbzeug

## Patentansprüche

1. Verfahren zur Herstellung eines Verbindungselementes (1, 30), insbesondere zum gelenkigen Verbinden von im Fahrwerk angeordneten Bauteilen, wobei das Verbindungselement (1, 30) von einem Profilelement (6, 31) gebildet wird, das einen Gelenkabschnitt (2) zur Aufnahme eines Gelenkbauteils (5), einen Mittenabschnitt (4) und einen Verbindungsabschnitt (3) aufweist, wobei das Profilelement (6, 31) durch eine Anordnung zumindest eines ersten Profilabschnitts (7, 32) und zumindest eines zweiten Profilabschnitts (8, 33) gebildet wird, welche mittels zumindest eines Fixierelements (9, 10) durch Formschluss in ihrer Position gehalten werden, und in den sich ausbildenden Gelenkabschnitt (2) ein Gelenkbauteil (5) eingesetzt wird, **dadurch gekennzeichnet, dass** der erste Profilabschnitt (32) und der zweite Profilabschnitt (33) einteilig ausgebildet wird, wobei diese beiden Profilabschnitte (32; 33) an einander gegenüberliegenden ringförmigen Abschnitten (19) mittels eines Stegs (34) miteinander verbunden werden, und dass das Profilelement (6, 31) und das Gelenkbauteil (5) abschnittsweise mit einem Kunststoff umspritzt werden.

2. Verfahren nach Anspruch 1, **dadurch gekennzeichnet, dass** vor dem Umspritzen im Bereich des zumindest einen ersten und zweiten Profilabschnittes (7, 32; 8, 33), der den Mittenabschnitt (4) und den Verbindungsabschnitt (3) des Profilelements (6, 31) definiert, ein Kern (16) zwischen den ersten Profilabschnitt (7, 32) und den zweiten Profilabschnitt (8, 33) eingelegt wird.

3. Verfahren nach einem der Ansprüche 1 oder 2, **dadurch gekennzeichnet, dass** der zumindest eine erste Profilabschnitt (7, 32) und der zumindest eine zweite Profilabschnitt (8, 33) aus einem Metall oder einem von dem für das Umspritzen verwendeten Kunststoffmaterial abweichenden Kunststoffmaterial hergestellt werden.

4. Verfahren nach einem der vorangehenden Ansprüche, **dadurch gekennzeichnet, dass** das Profilelement (6, 31) mit einem faserverstärkten Kunststoff umspritzt wird.

5. Verfahren nach einem der vorangehenden Ansprüche, **dadurch gekennzeichnet, dass** der zumindest eine erste Profilabschnitt (7, 32) und der zumindest eine zweite Profilabschnitt (8, 33) durch ein zerteilendes Fertigungsverfahren hergestellt werden.

6. Verfahren nach einem der Ansprüche 1 bis 4, **dadurch gekennzeichnet, dass** der zumindest eine erste Profilabschnitt (7, 32) und der zumindest eine zweite Profilabschnitt (8, 33) durch Spritzpressen hergestellt werden.

7. Verfahren nach einem der vorangehenden Ansprüche, **dadurch gekennzeichnet, dass** das zumindest eine Fixierelement (9, 10) auf den zumindest einen ersten Profilabschnitt (7, 32) und den zumindest einen zweiten Profilabschnitt (8, 33) aufgepresst wird.

8. Verbindungselement (1, 30), insbesondere zum gelenkigen Verbinden von im Fahrwerk angeordneten Bauteilen, wobei das Verbindungselement (1, 30) ein Profilelement (6, 31) umfasst, das einen Gelenkabschnitt (2) zur Aufnahme eines Gelenkbauteils (5), einen Mittenabschnitt (4) und einen Verbindungsabschnitt (3) aufweist, wobei das Profilelement (6, 31) durch eine Anordnung zumindest eines ersten Profilabschnitts (7, 32) und zumindest eines zweiten Profilabschnitts (8, 33) gebildet ist, wobei zumindest ein Fixierelement (9, 10) durch Formschluss den zumindest einen ersten Profilabschnitt (7, 32) und den zumindest einen zweiten Profilabschnitt (8, 33) in ihrer Position hält, wobei von dem Gelenkabschnitt (2) des Profilelements (6, 31) ein Gelenkbauteil (5) aufgenommen ist, **dadurch gekennzeichnet, dass** der erste Profilabschnitt (32) und der zweite Profilabschnitt (33) einteilig ausgebildet sind, wobei diese beiden Profilabschnitte (32; 33) an einander gegenüberliegenden ringförmigen Abschnitten (19) mittels eines Stegs (34) miteinander verbunden sind, und dass das Profilelement (6, 31) und das in dem Gelenkabschnitt (2) aufgenommene Gelenkbauteil (5) abschnittsweise von einer im Spritzgussverfahren aufgebrachten Kunststoffschicht umgeben sind.

9. Verbindungselement (1, 30) nach Anspruch 8, **dadurch gekennzeichnet, dass** der zumindest eine erste Profilabschnitt (7, 32) und der zumindest eine zweite Profilabschnitt (8, 33) halbschalenförmig ausgebildet sind.

10. Verbindungselement (1, 30) nach einem der Ansprüche 8 oder 9, **dadurch gekennzeichnet, dass** das Verbindungselement (1, 30) als ein Spurstangenaußengelenk oder als ein Querlenker ausgeführt ist.

11. Verbindungselement (1, 30) nach einem der Ansprüche 8 bis 10, **dadurch gekennzeichnet, dass** das Gelenkbauteil (5) als ein Kugelgelenk (11) oder als ein Kugelzapfen (14) ausgebildet ist.

## Claims

1. Method for producing a connecting element (1, 30), in particular for the articulated connection of components which are arranged in the chassis, the connecting element (1, 30) being formed by a profile element (6, 31) which has a joint section (2) for receiving a joint component (5), a centre section (4) and a connecting section (3), the profile element (6, 31) being formed by way of an arrangement of at least one first profile section (7, 32) and at least one second profile section (8, 33) which are held in their position by way of a positively locking connection by means of at least one fixing element (9, 10), and a joint component (5) being inserted into the joint section (2) which is formed, **characterized in that** the first profile section (32) and the second profile section (33) are configured in one piece, the said two profile sections (32; 33) being connected to one another by means of a web (34) on annular sections (19) which lie opposite one another, and **in that** the profile element (6, 31) and the joint component (5) are overmoulded in sections with a plastic.

2. Method according to Claim 1, **characterized in that** a core (16) is inserted between the first profile section (7, 32) and the second profile section (8, 33) before the overmoulding in the region of the at least one first and second profile section (7, 32; 8, 33), which region defines the centre section (4) and the connecting section (3) of the profile element (6, 31).

3. Method according to either of Claims 1 and 2, **characterized in that** the at least one first profile section (7, 32) and the at least one second profile section (8, 33) are produced from a metal or a plastic material which differs from the plastic material which is used for the overmoulding.

4. Method according to one of the preceding claims, **characterized in that** the profile element (6, 31) is overmoulded with a fibre-reinforced plastic.

5. Method according to one of the preceding claims, **characterized in that** the at least one first profile section (7, 32) and the at least one second profile section (8, 33) are produced by way of a cutting manufacturing method.

6. Method according to one of Claims 1 to 4, **characterized in that** the at least one first profile section (7, 32) and the at least one second profile section (8, 33) are produced by way of transfer moulding.

7. Method according to one of the preceding claims, **characterized in that** the at least one fixing element (9, 10) is pressed onto the at least one first profile section (7, 32) and the at least one second profile section (8, 33) .

8. Connecting element (1, 30), in particular for the articulated connection of components which are arranged in the chassis, the connecting element (1, 30) comprising a profile element (6, 31) which has a joint section (2) for receiving a joint component (5), a centre section (4) and a connecting section (3), the profile element (6, 31) being formed by way of an arrangement of at least one first profile section (7, 32) and at least one second profile section (8, 33), at least one fixing element (9, 10) holding the at least one first profile section (7, 32) and the at least one second profile section (8, 33) in their position by way of a positively locking connection, a joint component (5) being received by the joint section (2) of the profile element (6, 31), **characterized in that** the first profile section (32) and the second profile section (33) are configured in one piece, the said two profile sections (32; 33) being connected to one another by means of a web (34) on annular sections (19) which lie opposite one another, and **in that** the profile element (6, 31) and the joint component (5) which is received in the joint section (2) are surrounded in sections by a plastic layer which is applied using the injection moulding method.

9. Connecting element (1, 30) according to Claim 8, **characterized in that** the at least one first profile section (7, 32) and the at least one second profile section (8, 33) are of half shell-shaped configuration.

10. Connecting element (1, 30) according to either of Claims 8 and 9, **characterized in that** the connecting element (1, 30) is configured as a tie rod outer joint or as a wishbone.

11. Connecting element (1, 30) according to one of Claims 8 to 10, **characterized in that** the joint component (5) is configured as a ball joint (11) or as a ball pivot (14) .

## Revendications

1. Procédé de fabrication d'un élément de liaison (1, 30), en particulier pour la liaison articulée de composants disposés dans le châssis, l'élément de liaison (1, 30) étant formé par un élément profilé (6, 31), qui comprend une partie de joint (2) servant à recevoir un composant de joint (5), une partie centrale (4) et une partie de liaison (3), l'élément profilé (6, 31) étant formé par un agencement d'au moins une première partie profilée (7, 32) et d'au moins une deuxième partie profilée (8, 33), lesquelles sont maintenues dans leur position par complémentarité de forme au moyen d'au moins un élément de fixation (9, 10), et un composant de joint (5) étant inséré dans la partie de joint (2) se formant, **caractérisé en ce que** la première partie profilée (32) et la deuxième partie profilée (33) sont formées d'une seule pièce, ces deux parties profilées (32 ; 33) étant reliées l'une à l'autre au moyen d'un élément jointif (34) au niveau de parties (19) annulaires en regard l'une de l'autre, et **en ce que** l'élément profilé (6, 31) et le composant de joint (5) sont surmoulés avec une matière synthétique dans certaines parties.

2. Procédé selon la revendication 1, **caractérisé en ce qu'**un noyau (16) est inséré entre la première partie profilée (7, 32) et la deuxième partie profilée (8, 33) avant le surmoulage dans la région de l'au moins une première et de l'au moins une deuxième partie profilée (7, 32 ; 8, 33) qui définit la partie centrale (4) et la partie de liaison (3) de l'élément profilé (6, 31).

3. Procédé selon l'une des revendications 1 et 2, **caractérisé en ce que** l'au moins une première partie profilée (7, 32) et l'au moins une deuxième partie profilée (8, 33) sont fabriquées à partir d'un métal ou d'une matière synthétique différente de la matière synthétique utilisée pour le surmoulage.

4. Procédé selon l'une des revendications précédentes, **caractérisé en ce que** l'élément profilé (6, 31) est surmoulé avec une matière synthétique renforcée par des fibres.

5. Procédé selon l'une des revendications précédentes, **caractérisé en ce que** l'au moins une première partie profilée (7, 32) et l'au moins une deuxième partie profilée (8, 33) sont fabriquées par un procédé de fabrication par découpage.

6. Procédé selon l'une des revendications 1 à 4, **caractérisé en ce que** l'au moins une première partie profilée (7, 32) et l'au moins une deuxième partie profilée (8, 33) sont fabriquées par moulage par compression-transfert.

7. Procédé selon l'une des revendications précédentes, **caractérisé en ce que** l'au moins un élément de fixation (9, 10) est pressé sur l'au moins une première partie profilée (7, 32) et l'au moins une deuxième partie profilée (8, 33).

8. Élément de liaison (1, 30), en particulier pour la liaison articulée de composants disposés dans le châssis, l'élément de liaison (1, 30) comportant un élément profilé (6, 31), qui comprend une partie de joint (2) servant à recevoir un composant de joint (5), une partie centrale (4) et une partie de liaison (3), l'élément profilé (6, 31) étant formé par un agencement d'au moins une première partie profilée (7, 32) et d'au moins une deuxième partie profilée (8, 33), au moins un élément de fixation (9, 10) maintenant par complémentarité de forme l'au moins une première partie profilée (7, 32) et l'au moins une deuxième partie profilée (8, 33) dans leur position, un composant de joint (5) étant reçu par la partie de joint (2) de l'élément profilé (6, 31), **caractérisé en ce que** la première partie profilée (32) et la deuxième partie profilée (33) sont formées d'une seule pièce, ces deux parties profilées (32 ; 33) étant reliées l'une à l'autre au moyen d'un élément jointif (34) au niveau de parties (19) annulaires en regard l'une de l'autre, et **en ce que** l'élément profilé (6, 31) et le composant de joint (5) reçu dans la partie de joint (2) sont entourés dans certaines parties par une couche de matière synthétique appliquée dans le procédé de moulage par injection.

9. Élément de liaison (1, 30) selon la revendication 8, **caractérisé en ce que** l'au moins une première partie profilée (7, 32) et l'au moins une deuxième partie profilée (8, 33) sont formées en forme de demi-coque.

10. Élément de liaison (1, 30) selon l'une des revendications 8 et 9, **caractérisé en ce que** l'élément de liaison (1, 30) est réalisé comme un joint extérieur de barre d'accouplement ou comme un bras de liaison transversal.

11. Élément de liaison (1, 30) selon l'une des revendications 8 à 10, **caractérisé en ce que** le composant de joint (5) est formé comme un joint à rotule (11) ou comme un tourillon à rotule (14).
